# FASCICULE DE BREVET EUROPEEN

(11) **EP 2 844 956 B1**
(45) Date de publication et mention de la délivrance du brevet: **12.10.2016**
(21) Numéro de dépôt: 13720379.0
(22) Date de dépôt: 02.05.2013
(51) Int. Cl.: G01D 11/28

(54) **ELEMENT GUIDE DE LUMIERE ET DE COUVRAGE, TABLEAU DE BORD ET PROCEDE DE FABRICATION D'UN ELEMENT DECORATIF**
LICHTFÜHRUNGSELEMENT UND ABDECKUNG, ARMATURENBRETT UND HERSTELLUNGSVERFAHREN EINES DEKORATIVEN ELEMENTES
LIGHT GUIDE ELEMENT AND COVER, DASHBOARD AND METHOD OF FABRICATION OF A DECORATIVE ELEMENT

(30) Priorité: 03.05.2012 FR 1201296
(43) Date de publication de la demande: 11.03.2015
(73) Titulaire: Visteon Electronics France, 95892 Cergy Pontoise Cedex (FR)
(72) Inventeur: BOX, Benoit, F-95290 L'Isle Adam (FR)
(74) Mandataire: Schwöbel, Thilo K.
(86) Numéro de dépôt international: PCT/EP2013/059138
(87) Numéro de publication internationale: WO 2013/164400

(56) Documents cités:
- EP-A1- 0 919 791
- WO-A1-2007/002000
- GB-A- 2 023 834
- US-A- 5 779 339

## Description

La présente invention concerne un élément guide de lumière et de couvrage, un tableau de bord, notamment pour un véhicule automobile, et un procédé de fabrication d'un élément guide de lumière et de couvrage.

Des éléments guide de lumière sont connus, notamment pour les tableaux de bord et notamment pour de véhicules automobiles.

Par ailleurs, il est connu de positionner un élément de couvrage pour couvrir un élément guide de lumière par l'arrière lorsque le tableau de bord comprend un premier appareil indicateur à aiguille devant une surface d'affichage (du point de vue de la position normale de vue d'un utilisateur du tableau de bord) et un deuxième appareil indicateur à aiguille derrière la surface d'affichage, l'élément de couvrage évitant que de la lumière du deuxième appareil indicateur à aiguille soit visible par un utilisateur à des endroits qui ne correspondent pas à la partie de la surface d'affichage réservée au deuxième appareil indicateur à aiguille.

Egalement, il est connu des dispositifs de tableau de bord tels que des éléments interagissent avec des ressorts pour être positionnés correctement. Un tel dispositif est - par exemple - connu de la publication US 7 527 386 B1. EP 0919 791 A1 divulgue un dispositif de guidage de lumière, par exemple pour une utilisation sur un tableau de bord de véhicule automobile. WO 2007/0020000 A1 enseigne un tableau de bord mince avec un revêtement anti-réfléchissant. GB 2 023 834 A manifeste un dispositif d'affichage de valeurs mesurées, en particulier la vitesse des véhicules. US 5 779 339 A manifeste un appareil de source lumineuse de surface utilisée comme source de rétro-éclairage pour éclairer un liquide unité d'affichage à cristaux de l'arrière dans les équipements portables.

Un tel tableau de bord a l'inconvénient que l'assemblage du tableau de bord est compliqué et engendre des coûts importants.

La présente invention a notamment pour but de pallier aux inconvénients de l'art connu, et notamment ceux cités ci-dessus, et a également pour but de proposer un élément guide de lumière et de couvrage ainsi qu'un tableau de bord d'un véhicule qui peut être réalisé de manière simple et efficace et qui a un aspect esthétique avantageux.

Suivant l'invention, ce but est atteint par un élément guide de lumière et de couvrage, notamment pour l'usage liée à un tableau de bord d'un véhicule automobile, l'élément guide de lumière et de couvrage comprenant une première partie et une deuxième partie, la première partie de l'élément guide de lumière et de couvrage étant réalisée d'un premier matériau transparent, la deuxième partie de l'élément guide de lumière et de couvrage étant réalisée d'un deuxième matériau opaque, caractérisé en ce que la première partie de l'élément guide de lumière et de couvrage et la deuxième partie de l'élément guide de lumière et de couvrage sont réalisées d'une seule pièce, le deuxième matériau a la propriété étant plus souple que le premier matériau.

De par une telle réalisation de l'élément guide de lumière et de couvrage, il est avantageusement possible de réduire ou de supprimer les tolérances d'assemblages entre la première partie de l'élément guide de lumière et de couvrage et la deuxième partie de l'élément guide de lumière et de couvrage. Ceci permet non seulement d'améliorer l'aspect esthétique de l'élément guide de lumière et de couvrage notamment lorsque la deuxième partie de l'élément guide de lumière et de couvrage est illuminée - notamment par l'arrière de l'élément guide de lumière et de couvrage (d'un point de vue de la position normale de vue d'un utilisateur du tableau de bord) -, mais permet également de réduire les coûts associés à l'élément guide de lumière et de couvrage.

Un perfectionnement préféré de l'invention réside dans le fait que la première partie de l'élément guide de lumière et de couvrage et la deuxième partie de l'élément guide de lumière et de couvrage sont réalisé par l'intermédiaire d'un moulage par injection à deux étapes.

Selon un mode de réalisation préféré de l'élément guide de lumière et de couvrage selon la présente invention, la première partie de l'élément guide de lumière et de couvrage et la deuxième partie de l'élément guide de lumière et de couvrage sont réalisé par l'intermédiaire d'un moulage par injection à deux composantes.

De par de telles réalisations de l'élément guide de lumière et de couvrage inventif, il est avantageusement possible de minimiser les efforts pour fabriquer l'élément guide de lumière et de couvrage et de réduire au maximum les tolérances d'assemblage.

Parce que e deuxième matériau a la propriété d'être plus souple que le premier matériau , il est avantageusement possible selon la présente invention de prévoir - lors du montage de l'élément guide de lumière et de couvrage avec les autres éléments du tableau de bord - que l'élément guide de lumière et de couvrage est positionné en contact, notamment par l'intermédiaire de sa deuxième partie, avec un élément décoratif du tableau de bord, notamment en forme de film partiellement transparent ou translucide, qui est visible de l'extérieur, c'est à dire depuis une position normale de vue d'un utilisateur du tableau de bord.

Un autre perfectionnement préféré de l'invention réside dans le fait que le premier matériau comprend
-- le polyméthacrylate de méthyle (PMMA)
   et/ou
-- le polycarbonate (PC).
ou une composition de ces matériaux.

De par une telle réalisation du tableau de bord inventif, il est avantageusement possible de conférer à la première partie de l'élément guide de lumière et de couvrage une transparence souhaitée, notamment pour réaliser des régions de cadran ou d'affichage d'éléments optiques d'alerte ou d'information pour un utilisateur d'un tableau de bord de véhicule automobile.

Par ailleurs, la présente invention concerne également un tableau de bord de véhicule automobile comprenant au moins un élément guide de lumière et de couvrage inventif.

De par une telle réalisation, il est avantageusement possible d'augmenter le niveau de sécurité du véhicule automobile car l'utilisateur, notamment le conducteur du véhicule automobile, peut se concentrer sur les informations importantes et n'est pas distrait par des reflets, c'est à dire de la lumière qui, issue du deuxième appareil indicateu à appareil indicateur à aiguille, se propage et, par conséquent, est visible de manière et à des endroits non-souhaités par un utilisateur du tableau de bord.

Un autre mode de réalisation préférée selon la présente invention concerne un tableau de bord comprenant un dispositif d'affichage, le dispositif d'affichage ayant une zone d'affichage avec un premier appareil indicateur à aiguille susceptible d'être entraîné en rotation autour d'un axe de rotation, la zone d'affichage ayant une première partie centrale par rapport à l'axe de rotation et une deuxième partie périphérique, un deuxième appareil indicateur à aiguille étant prévu pour illuminer au moins partiellement la deuxième partie périphérique de la zone d'affichage, la deuxième partie de l'élément guide de lumière et de couvrage étant prévu pour limiter l'illumination par le deuxième appareil indicateur à aiguille à la deuxième partie périphérique.

De par une telle réalisation du procédé d'affichage, il est avantageusement possible de réaliser un affichage ayant un aspect esthétique avantageux et par ailleurs contribue à l'augmentation du niveau de sécurité du véhicule automobile.

La présente invention concerne par ailleurs un procédé de fabrication d'un élément guide de lumière et de couvrage inventif, le procédé comprenant l'étape suivante:
-- dans une étape du procédé, la première partie et la deuxième partie de l'élément guide de lumière et de couvrage sont réalisées par l'intermédiaire d'un moulage par injection à deux étapes ou par l'intermédiaire d'un moulage par injection à deux composantes.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
la figure 1 est une vue schématique de perspective et une vue schématique de section d'une deuxième partie d'un élément guide de lumière et de couvrage selon la présente invention, et
la figure 2 est une vue schématique de perspective et de section d'une partie d'un tableau de bord, ainsi q'une vue schématique d'un élément guide de lumière et de couvrage selon la présente invention.

### DESCRIPTION DES DESSINS

Un dispositif d'affichage d'un tableau de bord selon la présente invention comprend normalement une surface d'affichage ou une zone d'affichage 30, notamment comprenant au moins un cadran.

Un premier appareil indicateur à aiguille 21 est associé à la zone d'affichage 30, le premier appareil indicateur à aiguille 21 étant susceptible d'être entraîné en rotation autour d'un axe de rotation.

La zone d'affichage a une première partie centrale 31 par rapport à l'axe de rotation et une deuxième partie périphérique 32, un deuxième appareil indicateur à aiguille 22 étant prévu pour illuminer au moins partiellement la deuxième partie périphérique 32 de la zone d'affichage 30. A cet effet, le deuxième appareil indicateur à aiguille 22 est de préférence un appareil indicateur à aiguille qui se trouve (caché) derrière (d'un point de vue normal d'un utilisateur) le plan de la zone d'affichage 30, et qui est également susceptible d'être entraîné en rotation autour d'un axe de rotation, de préférence la même axe de rotation du premier appareil indicateur à appareil indicateur à aiguille 21.

La deuxième partie 12 de l'élément guide de lumière et de couvrage 1 est prévu pour limiter l'illumination, par le deuxième appareil indicateur à aiguille 22, de la deuxième partie périphérique 32, c'est à dire d'éviter que de la lumière issue du deuxième appareil indicateur à aiguille 22 soit visible (par un utilisateur du tableau de bord inventif) dans d'autres parties de la zone d'affichage 30 que la deuxième partie périphérique 32. Ainsi, des reflets, et par conséquent le risque qu'un utilisateur soit distrait de la circulation du véhicule automobile, peuvent être évités.

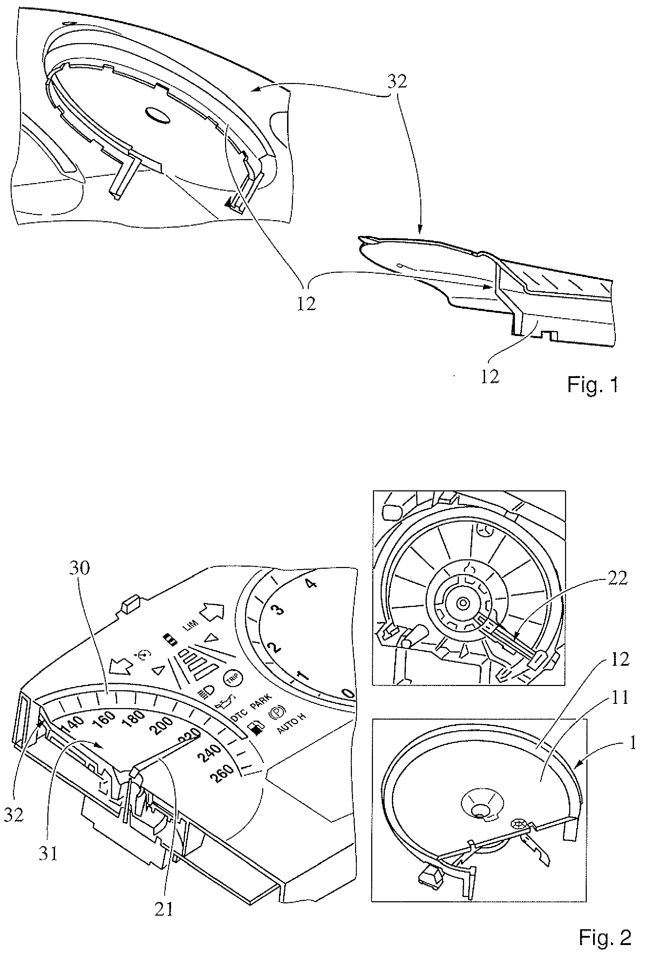

Selon la présente invention, il est proposé de réaliser l'élément guide de lumière et de couvrage 1 ayant une première partie 11 et une deuxième partie 12 comme le montre les figures 1 et 2 du dessin annexé.

La figure 1 montre une vue schématique de perspective et une vue schématique de section de la deuxième partie 12 d'un élément guide de lumière et de couvrage 1 selon la présente invention.

La figure 2 montre une vue schématique de perspective et de section d'une partie d'un tableau de bord, ainsi q'une vue schématique d'un élément guide de lumière et de couvrage 1 selon la présente invention.

L'élément guide de lumière et de couvrage 1 selon la présente invention comprend dans sa deuxième partie 12 une région dans laquelle l'élément guide de lumière et de couvrage 1 est couvert par sa face arrière de sorte que la lumière du deuxième appareil indicateur à aiguille 22 n'entre pas dans la partie centrale de l'élément guide de lumière et de couvrage 1 (qui correspond à la première partie centrale 31 de la zone d'affichage 30).

La première partie 11 et la deuxième partie 12 de l'élément guide de lumière et de couvrage 1 sont liées, notamment en formant une seule pièce. La première partie 11 de l'élément guide de lumière et de couvrage 1 comprend un premier matériau et la deuxième partie 12 de l'élément guide de lumière et de couvrage 1 comprend un deuxième matériau. Le premier matériau est notamment différent du deuxième matériau quant à ses propriétés physiques et/ou chimiques.

Par exemple, le premier matériau comprend
-- le polyméthacrylate de méthyle (PMMA)
   et/ou
-- le polycarbonate (PC).
ou une composition de ces matériaux.

Par exemple, le deuxième matériau comprend un matiériau plus opaque mais plus souple que le premier matériau. Ainsi, il est possible de positionner l'élément guide de lumière et de couvrage 1 de telle manière qu'il est appuyé contre un élément décoratif qui est positionné, par rapport à l'élément guide de lumière et de couvrage 1, dans la direction de l'utilisateur du tableau de bord.

Selon la présente invention, la première partie 11 est optiquement plus transparente, notamment complètement transparent (par rapport à la transparence possible avec le premier matériau, et la deuxième partie 12 est optiquement opaque.

Il est préféré que les deux parties 11, 12 de l'élément guide de lumière et de couvrage 1 sont fabriquées par l'intermédiaire d'un moulage par injection à deux étapes ou par l'intermédiaire d'un moulage par injection à deux composantes Il est également possible que l'élément guide de lumière et de couvrage est réalisé par l'intermédiaire d'un moulage par injection à trois (ou plus d') étapes ou par l'intermédiaire d'un moulage par injection à trois (ou plus de) composantes.

### Liste des signes de référence

- 1: élément guide de lumière et de couvrage
- 11: première partie de l'élément guide de lumière et de couvrage
- 12: deuxième partie de l'élément guide de lumière et de couvrage
- 21: premier appareil indicateur à aiguille
- 22: deuxième appareil indicateur à aiguille
- 30: zone d'affichage
- 31: première partie centrale
- 32: deuxième partie périphérique

## Revendications

1. Élément guide de lumière et de couvrage (1), notamment pour l'usage liée à un tableau de bord d'un véhicule automobile, l'élément guide de lumière et de couvrage (1) comprenant une première partie (11) et une deuxième partie (12), la première partie (11) de l'élément guide de lumière et de couvrage (1) étant réalisée d'un premier matériau transparent, la deuxième partie (12) de l'élément guide de lumière et de couvrage (1) étant réalisée d'un deuxième matériau opaque, la première partie (11) de l'élément guide de lumière et de couvrage (1) et la deuxième partie (12) de l'élément guide de lumière et de couvrage (1) étant réalisées d'une seule pièce, **caractérisé en ce que** le deuxième matériau a la propriété d'être plus souple que le premier matériau.

2. Elément guide de lumière et de couvrage (1) selon la revendication 1, **caractérisé en ce que** la première partie (11) de l'élément guide de lumière et de couvrage (1) et la deuxième partie (12) de l'élément guide de lumière et de couvrage (1) sont réalisé par l'intermédiaire d'un moulage par injection à deux étapes.

3. Elément guide de lumière et de couvrage (1) selon l'une quelconque des revendications précédentes, **caractérisé en ce que** la première partie (11) de l'élément guide de lumière et de couvrage (1) et la deuxième partie (12) de l'élément guide de lumière et de couvrage (1) sont réalisé par l'intermédiaire d'un moulage par injection à deux composantes.

4. Elément guide de lumière et de couvrage (1) selon l'une quelconque des revendications précédentes, **caractérisé en ce que** le premier matériau comprend
-- le polyméthacrylate de méthyle (PMMA)
et/ou
-- le polycarbonate (PC).
ou une composition de ces matériaux.

5. Tableau de bord de véhicule automobile comprenant au moins un élément guide de lumière et de couvrage (1) selon l'une quelconque des revendications précédentes.

6. Tableau de bord selon la revendication 5, **caractérisé en ce que** le tableau de bord comprend un dispositif d'affichage, le dispositif d'affichage ayant une zone d'affichage (30) avec un premier appareil indicateur à aiguille (21) susceptible d'être entraîné en rotation autour d'un axe de rotation, la zone d'affichage (30) ayant une première partie (31) centrale par rapport à l'axe de rotation et une deuxième partie périphérique (32), un deuxième appareil indicateur à aiguille (22) étant prévu pour illuminer au moins partiellement la deuxième partie périphérique (32) de la zone d'affichage (30), la deuxième partie (12) de l'élément guide de lumière et de couvrage (1) étant prévu pour limiter l'illumination par le deuxième appareil indicateur à aiguille (22) à la deuxième partie périphérique (32).

7. Procédé de fabrication d'un élément guide de lumière et de couvrage (1) selon l'une quelconque des revendications 1 à 5, **caractérisé en ce que**
-- dans une étape du procédé, la première partie (11) et la deuxième partie (12) de l'élément guide de lumière et de couvrage (1) sont réalisées par l'intermédiaire d'un moulage par injection à deux étapes ou par l'intermédiaire d'un moulage par injection à deux composantes.

## Patentansprüche

1. Lichtführungs- und Abdeckelement (1), insbesondere für die Verwendung in Verbindung mit einem Armaturenbrett eines Kraftfahrzeugs, wobei das Lichtführungs- und Abdeckelement (1) einen ersten Teil (11) und einen zweiten Teil (12) umfasst, wobei der erste Teil (11) des Lichtführungs- und Abdeckelements (1) aus einem ersten transparenten Material realisiert ist, wobei der zweite Teil (12) des Lichtführungs- und Abdeckelements (1) aus einem zweiten opaken Material realisiert ist, wobei der erste Teil (11) des Lichtführungs- und Abdeckelements (1) und der zweite Teil (12) des Lichtführungs- und Abdeckelements (1) einstückig realisiert sind, **dadurch gekennzeichnet, dass** das zweite Material die Eigenschaft hat, flexibler als das erste Material zu sein.

2. Lichtführungs- und Abdeckelement (1) nach Anspruch 1, **dadurch gekennzeichnet, dass** der erste Teil (11) des Lichtführungs- und Abdeckelements (1) und der zweite Teil (12) des Lichtführungs- und Abdeckelements (1) mittels Spritzgießen in zwei Schritten realisiert sind.

3. Lichtführungs- und Abdeckelement (1) nach einem der vorhergehenden Ansprüche, **dadurch gekennzeichnet, dass** der erste Teil (11) des Lichtführungs- und Abdeckelements (1) und der zweite Teil (12) des Lichtführungs- und Abdeckelements (1) mittels Spritzgießen aus zwei Komponenten realisiert sind.

4. Lichtführungs- und Abdeckelement (1) nach einem der vorhergehenden Ansprüche, **dadurch gekennzeichnet, dass** das erste Material Folgendes enthält:
- Polymethylmethacrylat PMMA)
und/oder
- Polycarbonat (PC)
oder eine Zusammensetzung aus diesen Materialien.

5. Armaturenbrett für Kraftfahrzeug, umfassend mindestens ein Lichtführungs- und Abdeckelement (1) nach einem der vorhergehenden Ansprüche.

6. Armaturenbrett nach Anspruch 5, **dadurch gekennzeichnet, dass** das Armaturenbrett eine Anzeigevorrichtung umfasst, wobei die Anzeigevorrichtung eine Anzeigezone (30) mit einer ersten Anzeigeeinrichtung mit Zeigernadel (21) hat, die zur Drehung um eine Drehachse angetrieben werden kann, wobei die Anzeigezone (30) einen ersten Teil (31), der relativ zu der Drehachse mittig ist, und einen zweiten Umfangsteil (32) hat, wobei eine zweite Anzeigeeinrichtung mit Zeigernadel (22) vorgesehen ist, um den zweiten Umfangsteil (32) der Anzeigezone (30) mindestens teilweise zu beleuchten, wobei der zweite Teil (12) des Lichtführungs- und Abdeckelements (1) vorgesehen ist, um die Beleuchtung durch die zweite Anzeigeeinrichtung mit Zeigernadel (22) auf den zweiten Umfangsteil (32) zu begrenzen.

7. Verfahren zur Herstellung eines Lichtführungs- und Abdeckelements (1) nach einem der Ansprüche 1 bis 5, **dadurch gekennzeichnet, dass**
- in einem Schritt des Verfahrens der erste Teil (11) und der zweite Teil (12) des Lichtführungs- und Abdeckelements (1) mittels Spritzgießen in zwei Schritten oder mittels Spritzgießen aus zwei Komponenten realisiert werden.

## Claims

1. Light-guide and cover element (1), in particular for use in connection with a dashboard of a motor vehicle, the light-guide and cover element (1) comprising a first part (11) and a second part (12), the first part (11) of the light-guide and cover element (1) being made of a first, transparent substance, the second part (12) of the light-guide and cover element (1) being made of a second, opaque substance, the first part (11) of the light-guide and cover element (1) and the second part (12) of the light-guide and cover element (1) being formed integrally, **characterised in that** the second substance has the property of being more flexible than the first substance.

2. Light-guide and cover element (1) according to claim 1, **characterised in that** the first part (11) of the light-guide and cover element (1) and the second part (12) of the light-guide and cover element (1) are formed by two-step injection moulding.

3. Light-guide and cover element (1) according to any of the preceding claims, **characterised in that** the first part (11) of the light-guide and cover element (1) and the second part (12) of the light-guide and cover element (1) are formed by two-component injection moulding.

4. Light-guide and cover element (1) according to any of the preceding claims, **characterised in that** the first substance comprises
- polymethyl methacrylate (PMMA)
and/or
- polycarbonate (PC)
or a composition of these substances.

5. Motor vehicle dashboard comprising at least one light-guide and cover element (1) according to any of the preceding claims.

6. Dashboard according to claim 5, **characterised in that** the dashboard comprises a display device, the display device having a display region (30) having a first needle indicator device (21) which can be driven in rotation about an axis of rotation, the display region (30) having a first part (31) which is central with respect to the axis of rotation and a second peripheral part (32), a second needle indicator device (22) being provided to illuminate the second peripheral part (32) of the display region (30) at least in part, the second part (12) of the light-guide and cover element (1) being provided to limit the illumination from the second needle indicator device (22) to the second peripheral part (32).

7. Process for manufacturing a light-guide and cover element (1) according to any of claims 1 to 5, **characterised in that**
- in a step of the process, the first part (11) and the second part (12) of the light-guide and cover element (1) are formed by two-step injection moulding or by two-component injection moulding.
